# EUROPÄISCHE PATENTANMELDUNG

(11) **EP 0 927 708 A2**
(43) Veröffentlichungstag der Anmeldung: **07.07.1999**
(21) Anmeldenummer: 98124636.6
(22) Anmeldetag: 23.12.1998
(51) Int. Cl.: C04B 28/00

(54) **Anorganische Werkstoffmischung sowie Verfahren zur Herstellung eines hydraulisch abbindenden Produkts**

(30) Priorität: 29.12.1997 AT 218697
(71) Anmelder: Lukas, Walter, Prof. Dr., A-6080 Igls (AT)
(72) Erfinder: Lukas, Walter, Prof. Dr., A-6080 Igls (AT)
(74) Vertreter: Becker, Thomas, Dr., Dipl.-Ing.

(57) **Zusammenfassung**

Die Erfindung betrifft eine anorganische Werkstoffmischung sowie ein Verfahren zur Herstellung eines hydraulisch abbindenden Produkts

## Beschreibung

Die Erfindung betrifft eine anorganische Werkstoffmischung sowie ein Verfahren zur Herstellung eines hydraulisch abbindenden Produkts.

Eine solche anorganische Werkstoffmischung kann zum Beispiel zur Herstellung eines Betons verwendet werden. Beton besteht üblicherweise aus Zement und Zuschlag.

Aus der DD 244 545 B5 ist ein Verfahren zur Herstellung von Betonmassen aus Abfallprodukten bekannt, bei dem Industrieschlämmen mit einem Wasser-Feststoff-Verhältnis größer 1,3 ein stark wasserbindender, die Erhärtung beeinflussender Stoff in Mengen von 20 bis 60 Massenprozent, bezogen auf das Gemisch, zugegeben wird. Die Industrieschlämme können beispielsweise aus Schleifschlamm, Beton- und Bindemittelschlamm oder Rückständen aus der nassen Rauchgasentschwefelung stammen. Als stark wasserbindender, die Erhärtung beeinflussender Stoff wird aktive Trockenasche vorgeschlagen. Die bekannte Betonmasse kann für Tragschichten, für Sanierungsarbeiten an Straßen, Bauwerken oder Verkehrsflächen sowie für Betonwaren eingesetzt werden.

Der hohe Wassergehalt ist verfahrenstechnisch nachteilig. Auch die Sulfatbeständigkeit und die Beständigkeit des Betons gegen Deponiesickerwässer ist unzureichend, dann jedoch unerläßlich, wenn der Beton beispielsweise im Deponiebau, als Wegematerial oder dergleichen eingesetzt werden soll.

Aufgabe der Erfindung ist es deshalb, eine anorganische Werkstoffmischung anzubieten, die zur Herstellung eines hydraulisch abbindenden Produktes geeignet ist, welches eine hohe Sulfatbeständigkeit und Beständigkeit gegenüber Deponiesickerwässern aufweist, wobei bevorzugt Abfallstoffe verwendet werden sollen.

Dazu wird eine anorganische Werkstoffmischung vorgeschlagen, die neben einem Zuschlag D ein Bindemittel aus folgenden Komponenten umfaßt:
- mindestens einer latent hydraulischen Komponente A,
- mindestens einem Anreger B für die latent hydraulische Komponente A,
- mindestens einer, mindestens teilentwässerten Calciumsulfit- und/oder Calciumsulfat-Komponente.

Dabei soll der Anteil des Zuschlages D, bezogen auf die gesamte Werkstoffmischung (A+B+C+D) 60 bis 95 Gew.-% betragen.

Das Gewichtsverhältnis der Komponente A zur Summe der Komponenten B und C soll zwischen 92:8 und 55:45 liegen.

Der Anteil der Komponente C an der Summe der Komponenten A, B und C wird mit > gleich 2 Gew.-% angegeben. Die Komponente C, also die teilentwässerte Calciumsulfit-Komponente und/oder die teilentwässerte Calciumsulfat-Komponente (insbesondere α-,β-Halbhydrat oder Anhydrit) kann ganz oder teilweise in der Komponente A enthalten sein. Auch die Komponente B kann ganz oder teilweise bereits in der Komponente A enthalten sein.

Mit anderen Worten: gegenüber einem konventionellen Beton wird der Zementanteil durch die Komponenten A, B und C in den angegebenen Konzentrationen (Gewichtsanteilen) ersetzt.

Auf diese Weise entsteht ein betonähnliches Produkt, eine Art 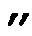 Sonderbeton", der gegenüber herkömmlichen Betonen eine Reihe technologischer Besonderheiten aufweist, mit denen die oben genannte Aufgabe erfüllt wird.

Ein aus der genannten anorganischen Werkstoffmischung nach Zugabe von Wasser hergestellter Sonderbeton zeigt eine extreme Beständigkeit gegen Sulfat- und Deponiesickerwässerangriff und kann daher problemlos im Deponiebau, beispielsweise als Dammbaustoff, Stützkörper oder Wegematerial eingesetzt werden. Besonders hervorzuheben ist die hohe Sulfatbeständigkeit. Darüber hinaus zeigt das aus der anorganischen Werkstoffmischung hergestellte Produkt eine geringe bis keine Schwindneigung und nur eine sehr geringe Wasseraufnahmekapazität. Es können Bewehrungskomponenten wie Fasern, Bewehrungsmatten oder Stahleinlagen vor oder während der Herstellung eingebracht werden.

Die Werkstoffmischung läßt sich nach Zugabe von Wasser in einer Menge von 20 bis 85 Gew.-%, bezogen auf die Summe der Komponenten A, B und C herstellen, weist also einen niedrigen Wassergehalt auf und ermöglicht damit die Herstellung auch frostbeständiger Produkte.

Diese sind damit zum Beispiel in der Lawinenverbauung, in sogenannten Sauberkeitsschichten, für Lärmschutzwände oder den Dammbau (Böschungen) verwendbar. Auch eine Verwendung als Ausgangsmaterial für Spritzbeton (Naß- oder Trockenverfahren) kommt in Betracht.

Durch Zugabe eines Luftporenbildners kann zusätzlich gezielt eine Frostbeständigkeit beziehungsweise Frost-Tausalz-Beständigkeit erreicht werden.

Die mit Wasser angemachte Werkstoffmischung ist pumpbar. Die Pumpbarkeit kann durch Zugabe eines Fließmittels beziehungsweise Verflüssigers, wie aus der Betontechnologie bekannt ist, zusätzlich gefördert werden.

Nach einer Ausführungsform besteht die latent hydraulische Komponente aus Flugasche, gemahlener Kesselasche, gemahlener Hochofenschlacke (Hüttensand), amorpher Kieselsäure oder Trass, einzeln oder in Kombination.

Zur Auslösung der hydraulischen Reaktion der latent hydraulischen Komponente wird der Anreger B zugegeben, der beispielsweise aus einem Erdalkalioxid, Erdalkalihydroxid, einem Tonerdeschmelzzementklinker oder einem sulfatbeständigen, insbesondere hochsulfatbeständigen Zementklinker, insbesondere C₃A-freiem oder C₃A-armem (< 1,0 Gew.-%) Zementklinker, einzeln oder in Kombination bestehen kann. Die Menge des Anregers kann auf die zur Auslösung der hydraulischen Reaktion der Komponente A notwendige Menge beschränkt werden.

Nach einer Weiterbildung der Erfindung umfaßt die Werkstoffmischung mindestens eine der Komponenten A, B oder C einzeln oder in Kombination in vorsynthetisierter Form.

So kann beispielsweise die Komponente C ein Produkt aus der Rauchgasentschwefelung eines Kraftwerkes sein.

Eine besonders vorteilhafte Weiterentwicklung der Werkstoffmischung sieht vor, daß die Komponenten A, B und C gemeinsam als eine vorsynthetisierte Fertigkomponente innerhalb der Werkstoffmischung in den vorgenannten Gewichtsanteilen vorliegt.

Mit anderen Worten: die Werkstoffmischung besteht in diesem Fall lediglich aus der die Komponenten A, B und C enthaltenden vorsynthetisierten Fertigkomponente und dem Zuschlag, also aus lediglich zwei Komponenten. Dies erleichtert die Herstellung und Aufbereitung der mit Wasser anmachbaren Werkstoffmischung.

Als eine solche vorsynthetisierte Fertigkomponente mit den Bestandteilen A, B und C kann zum Beispiel eine Fertigkomponente aus einer Rauchgasentschwefelung nach dem NIRO-ATOMIZER-Verfahren eingesetzt werden. Ein solches Gemisch umfaßt dann beispielsweise eine latent hydraulische Flugasche, Ca(OH)₂ als Anreger für die Flugasche sowie CaSO₄ · 2 H₂O und CaSO₃ · ¹/₂ H₂O, also Calciumsulfit-/Calciumsulfat-Derivate gemäß Komponente C.

Sofern bei diesem vorsynthetisierten Gemisch die Anteile A, B und C nicht innerhalb der vorstehend genannten Gewichtsanteile liegen sollten, kann die vorsynthetisierte Fertigmischung durch Zugabe entsprechender Anteile von A, B und/oder C auf das beanspruchte Massenverhältnis eingestellt werden.

Üblicherweise liegen die Komponenten A, B und C in einer Korngröße < 500 µm vor, wobei Korngrößen < 100 µm nach einer Ausführungsform vorgeschlagenen werden, insbesondere für die sulfatische/sulfitische Komponente C.

Für den Zuschlag schlägt die Erfindung nicht reaktive Komponenten vor, beispielsweise Baureststoffe, erhärtete Flugaschen, kompaktierten Gips (Gipspellets), Schotter, Gießereisande, Schlacken aus Müllverbrennungsanlagen, einzeln oder in Kombination in einer Korngröße < 150 mm.

Zum Beispiel zur Herstellung von Lärmschutzwänden kann der Zuschlag relativ grobkörnig eingesetzt werden.

Zur Herstellung von sogenannten Sauberkeitsschichten, also einer Art Magerbetonschicht, die beispielsweise dazu dient, in einer Baugrube vor dem Gießen des Fundamentes eine begehbare Grundlage zu schaffen, werden selbstverständlich Zuschläge in entsprechend kleinerer Körnung, beispielsweise < 50 mm, bevorzugt < 15 mm eingesetzt.

Die spezifische Werkstoffauswahl der Komponenten A, B und C ermöglicht es, auch zumindest teilweise kontaminierte Zuschläge zu verwenden. Hierzu zählen beispielsweise mit Öl oder Kraftstoff verunreinigter Schotter, kontaminierte Baurestmassen oder dergleichen.

Je nachdem, welches Endprodukt aus der Werkstoffmischung hergestellt werden soll, wird die Wassermenge dosiert. Die Wassermenge (zum Beispiel Prozeßwasser) kann zwischen 20 und 85 Gew.-%, bezogen auf die Summe der Komponenten A, B und C schwanken, wobei sich Konsistenzen (Viskositäten) zwischen erdfeucht (krümelig) bis gießfähig einstellen lassen.

## Patentansprüche

1. Anorganische Werkstoffmischung zur Herstellung eines hydraulisch abbindenden Produktes aus:
a: mindestens einer latenthydraulischen Komponente (A),
b: mindestens einem Anreger (B) für die latenthydraulische Komponente (A),
c: mindestens einer mindestens teilentwässerten Calciumsulfit- und/oder Calciumsulfat-Komponente (C) sowie
d: mindestens einem Zuschlag (D)
wobei
e: der Anteil des Zuschlags (D), bezogen auf die gesamte Werkstoffmischung (A+B+C+D), 60 bis 95 Gew.-% beträgt,
f: das Gewichtsverhältnis der Komponente (A) zur Summe der Komponenten (B) und (C) 92 : 8 bis 55 : 45 ist, und
g: der Anteil der Komponente (C) an der Summe der Komponenten (A), (B) und (C) mindestens 2 Gew.-% beträgt.

2. Werkstoffmischung nach Anspruch 1, bei der die latenthydraulische Komponente (A) aus Flugasche, gemahlener Kesselasche, gemahlener Hochofenschlacke, amorpher Kieselsäure oder Trass, einzeln oder in Kombination besteht.

3. Werkstoffmischung nach Anspruch 1, bei der der Anreger (B) für die latenthydraulische Komponente (A) aus Erdalkalioxid, Erdalkalihydroxid, Tonerdeschmelzzementklinker oder sulfatbeständigem Zementklinker, einzeln oder in Kombination besteht.

4. Werkstoffmischung nach Anspruch 1, bei der mindestens eine der Komponenten (A), (B) oder (C) eine vorsynthetisierte Fertigkomponente ist.

5. Werkstoffmischung nach Anspruch 4, bei der die Komponente (C) ein Produkt aus einer Rauchgasentschwefelung eines Kraftwerks ist.

6. Werkstoffmischung nach Anspruch 4, bei der die Komponenten (A), (B) und (C) eine vorsynthetisierte Fertigkomponente mit den Gewichtsanteilen gemäß Merkmal f) von Anspruch 1 ist.

7. Werkstoffmischung nach Anspruch 6, bei der die Komponenten (A), (B) und (C) als Fertigkomponente aus einer Rauchgasentschwefelung nach dem NIRO-ATOMIZER-Verfahren stammen.

8. Werkstoffmischung nach Anspruch 1, bei der zumindest die Komponente (C) in einer Kornfraktion < 100 µm vorliegt.

9. Werkstoffmischung nach Anspruch 1, bei der der Zuschlag (D) aus Baureststoffen, erhärteten Flugaschen, kompaktiertem Gips, Schotter, Gießereisand, Schlacke aus Müllverbrennungsanlagen, einzeln oder in Kombination in einer Korngröße < 150 mm besteht.

10. Werkstoffmischung nach Anspruch 1, bei der der Zuschlag (D) aus Baureststoffen, erhärteten Flugaschen, kompaktiertem Gips, Schotter, Gießereisand, Schlacke aus Müllverbrennungsanlagen, einzeln oder in Kombination in einer Korngröße < 50 mm besteht.

11. Werkstoffmischung nach Anspruch 1, bei der der Zuschlag (D) zumindest teilweise kontaminiert ist.

12. Verfahren zur Herstellung eines hydraulisch abbindenden Produktes wie einer Wand oder einer Deckschicht unter Verwendung der Werkstoffmischung gemäß einem der Ansprüche 1 bis 11 nach Zugabe von Wasser in einer Menge von 20 bis 85 Gew.-%, bezogen auf die Summe der Komponenten (A), (B) und (C).
